# EUROPEAN PATENT SPECIFICATION

(11) **EP 4 439 715 B1**
(45) Date of publication and mention of the grant of the patent: **05.08.2026**
(21) Application number: 23771131.2
(22) Date of filing: 17.03.2023
(51) Int. Cl.: H01M 4/36, H01M 4/62, H01M 4/13, H01M 4/139, H01M 10/0562

(54) **METHOD FOR PREPARING GRANULES FOR ALL-SOLID-STATE BATTERY ELECTRODE, AND ELECTRODE FOR ALL-SOLID-STATE BATTERY**
VERFAHREN ZUR HERSTELLUNG VON GRANULAT FÜR FESTKÖRPERBATTERIEELEKTRODE UND ELEKTRODE FÜR FESTKÖRPERBATTERIE
PROCÉDÉ DE PRÉPARATION DE GRANULÉS POUR ÉLECTRODE DE BATTERIE ENTIÈREMENT SOLIDE, ET ÉLECTRODE POUR BATTERIE ENTIÈREMENT SOLIDE

(30) Priority: 17.03.2022 KR 20220033208; 16.03.2023 KR 20230034278
(43) Date of publication of application: 02.10.2024
(73) Proprietor: LG Energy Solution, Ltd., Seoul 07335 (KR)
(72) Inventor: KIM, Sohee, Daejeon 34122 (KR); KWON, Hyejin, Daejeon 34122 (KR); KIM, Jeonggil, Daejeon 34122 (KR); KIM, Ki Tae, Daejeon 34122 (KR); KIM, Taegon, Daejeon 34122 (KR); KIM, Myeongsoo, Daejeon 34122 (KR)
(74) Representative: Goddar, Heinz J.
(86) International application number: PCT/KR2023/003571
(87) International publication number: WO 2023/177252

(56) References cited:
- EP-A1- 3 751 643
- JP-A- 2002 289 174
- JP-A- 2012 217 902
- JP-A- 2018 514 056
- KR-A- 20030 050 475
- KR-A- 20160 083 485
- KR-A- 20180 033 838
- KR-A- 20180 092 168
- US-A1- 2014 072 883

## Description

### [Technical Field]

The present invention relates to a method for preparing granules for an electrode for an all-solid-state battery and an all-solid battery electrode manufactured by the same. Specifically, the present invention relates to a method for preparing granules for an electrode for an all-solid-state battery, which is for improving the porosity of granular particles by preventing the components in the granular particles from moving to the outside and an all-solid battery electrode manufactured by the same.

### [Background Art]

From the viewpoint of the capacity, safety, output, large size, and miniaturization of the battery, various batteries that can overcome the limitations of the current lithium secondary battery are being studied.

Typically, a metal-air battery, which has a very large theoretical capacity in terms of capacity compared to a lithium secondary battery, an all-solid-state battery with no risk of explosion in terms of safety, a supercapacitor in terms of output, a NaS battery or redox flow battery (RFB) in terms of large size, a thin film battery in terms of miniaturization, and the like, are being continuously studied in academia and industry.

Among them, the all-solid-state battery refers to a battery in which the liquid electrolyte used in the existing lithium secondary battery is replaced with a solid, and it does not use a flammable solvent in the battery, so there is no ignition or explosion caused by the decomposition reaction of the conventional electrolyte, and thus safety can be greatly improved. In addition, in the case of the all-solid-state battery, since Li metal or Li alloy can be used as a material for the negative electrode, there is an advantage that the energy density for the mass and volume of the battery can be remarkably improved.

In particular, among solid electrolytes for the all-solid-state battery, inorganic solid electrolytes can be divided into sulfide-based and oxide-based. Currently, the most technologically developed solid electrolyte is a sulfide-based solid electrolyte, and as a material for this solid electrolyte, a material with an ion-conductivity close to that of an organic electrolyte has been developed.

Since the all-solid-state battery uses a solid electrolyte unlike the conventional lithium secondary battery that uses a liquid electrolyte, solid electrolytes cannot easily penetrate into the pores of the electrode and thus there may be problems with physical contact, etc. As a solution to these problems, a method of preparing granules containing an active material to secure pores on the outside of the granules, injecting a liquid solid electrolyte into the pores first, and then solidifying it was studied.

The granules refer to particles made of an active material, an electrically conductive material, and a binder, and these granules can be processed into an electrode by stacking them on an electrode current collector and applying heat and pressure (sheeting).

However, the granules were prepared by finely spraying the active material, the electrically conductive material, and the binder in the form of a slurry and drying them. According to this prior art, a phenomenon that the binder moves to the outside of the granules occurs during drying, and thus granular particles with a dense surface are prepared, and as a result, it is difficult for electrolytes to penetrate into the granular particles, so there was a problem that the cell resistance increases.

### [Prior Art Document]

### [Patent Document]

(Patent Document 1) Japanese Laid-open Patent Publication No. 2009-289601

Document KR 2016 0083485 A shows another electrode of the prior art.

### [Disclosure]

### [Technical Problem]

The inventors of the present invention have completed the present invention by discovering, after research, a method capable of improving the porosity of the surface of the granules containing an active material by preventing the movement of the binder contained in the granules, in the preparation of an electrode for an all-solid-state battery.

It is an object of the present invention to provide a method for preparing granules for an all-solid-state battery electrode, which can prevent the movement of the binder contained in the granules by manufacturing the granules to grow step by step by the sprayed binder and improve the porosity of the surface of the granules containing the active material.

### [Technical Solution]

According to a first aspect of the present invention, the present invention provides a method for preparing granules for an electrode of an all-solid-state battery comprising steps of claim 1.

In one embodiment of the present invention, step (1) can stir the active material and the electrically conductive material in a mixing container in which the blade rotates at a peripheral speed of 20 to 100 m/s.

According to the present invention, step (2) is carried out in a container with a main blade at the bottom for stirring the active material and a sub blade at the side for grinding the aggregated particles of the active material.

According to the present invention, the main blade rotates at a speed of 100 to 300 rpm.

According to the present invention, the sub blade rotates at a speed of 1000 to 3000 rpm.

In one embodiment of the present invention, the granules may be spherical particles having a diameter of 30 µm to 1000 µm.

In one embodiment of the present invention, the granules may have a porosity of 10 to 50 %.

In one embodiment of the present invention, the binder may be selected from the group consisting of acrylic binder, polyvinylidene fluoride, vinylidene fluoride-hexafluoropropylene copolymer, polyvinyl alcohol, starch, hydroxypropyl cellulose, regenerated cellulose, polyvinylpyrrolidone, polyimide, polyamideimide, polyethylene, polypropylene, ethylene-propylene-diene monomer, sulfonated-EPDM, styrene butadiene rubber and fluorine rubber.

According to a second aspect of the invention, the present invention provides an electrode in accordance with claim 6.

In one embodiment of the invention, the granules may be spherical particles having a diameter of 30 µm to 1000 µm.

In one embodiment of the invention, the binder may be selected from the group consisting of acrylic binder, polyvinylidene fluoride, vinylidenfluoride-hexafluoropropylene copolymer, polyvinyl alcohol, starch, hydroxypropylcellulose, regenerated cellulose, polyvinylpyrrolidone, polyimide, polyamideimide, polyethylene, polypropylene, ethylene-propylene-diene monomer (EPDM), sulfonated EPDM, styrene butadiene rubber and fluorine rubber.

According to a third aspect of the invention, the present invention provides an all-solid-state battery comprising an electrode for the all-solid-state battery as a positive electrode or negative electrode.

### [Advantageous Effects]

The preparation method of the granules for the electrode for the all-solid-state battery according to an embodiment of the present invention can improve the cohesion of the active material and the solid electrolyte when applied to the electrode of an all-solid-state battery, by suppressing the movement of the binder inside the granule, and improving the porosity of the surface of the granule.

### [Description of Drawings]

FIG. 1 is a view schematically showing an apparatus for manufacturing granules for the electrode for the all-solid-state battery according to an embodiment of the present invention.
FIG. 2 is a photograph taken by an electron microscope (SEM) of granules for the electrode for the all-solid-state battery according to an embodiment of the present invention.
FIG. 3 is a photograph taken by an electron microscope (SEM) of granules for the electrode for the all-solid-state battery according to another embodiment of the present invention.
FIG. 4 is a photograph taken by an electron microscope (SEM) of granules for the electrode for the all-solid-state battery according to another embodiment of the present invention.
FIG. 5 is a photograph of granules for the electrode for the all-solid-state battery according to one embodiment of the present invention.
FIG. 6 is a photograph of granules for the electrode for the all-solid-state battery according to another embodiment of the present invention.
FIG. 7 is a photograph of granules for the electrode for the all-solid-state battery according to another embodiment of the present invention.

### [Best Mode]

The embodiments provided according to the present invention can all be achieved by the following description. It is to be understood that the following description is to be understood as describing preferred embodiments of the present invention, and the present invention is not necessarily limited thereto.

With respect to the physical properties described herein, if measurement conditions and methods are not specifically described, the physical properties are measured according to measurement conditions and methods generally used by those skilled in the art.

One aspect of the present invention is to provide a method of preparing granules for the electrode for the all-solid-state battery.

According to one embodiment of the present invention, the preparation method of granules for the electrode for the all-solid-state battery comprises steps of (1) coating an electrically conductive material on an active material; and (2) spraying a binder on the coated active material to produce granules.

First, the preparation method of granules for the electrode for the all-solid-state battery comprises a step of (1) coating an electrically conductive material on an active material.

The electrode for the all-solid-state battery according to an embodiment of the present invention may be any one of a negative electrode and a positive electrode, and more specifically, the electrode for the all-solid-state battery may be a positive electrode.

If the electrode is a negative electrode, the electrode active material contained in the granules is not particularly limited as long as it can be used as a negative electrode active material for a lithium-ion secondary battery. For example, the negative electrode active material may be one or more species selected from carbon such as non-graphitizable carbon and graphite-based carbon; metal composite oxides such as LiₓFe₂O₃(0≤x≤1), LiₓWO₂(0≤x≤1), SnₓMe₁₋ₓMe'_{y}O_{z}(Me:Mn,Fe,Pb,Ge; Me': Al, B, P, Si, elements of groups 1, 2, and 3 of the periodic table, halogen; 0<x≤1; 1≤y≤3; 1≤z≤8); lithium metal; lithium alloy; silicon-based alloy; tin-based alloy; metal oxide such as SnO, SnO₂, PbO, PbO₂, Pb₂O₃, Pb₃O₄, Sb₂O₃, Sb₂O₄ Sb₂O₅, GeO, GeO₂, Bi₂O₃, Bi₂O₄ and Bi₂O₅, etc.; an electrical conductivity polymer such as polyacetylene; Li-Co-Ni based material; titanium oxide; lithium titanium oxide. According to one embodiment of the present invention, the negative electrode active material may comprise a carbonaceous material and/or Si.

If the electrode is a positive electrode, the electrode active material contained in the granule is not particularly limited as long as it can be used as a positive electrode active material for a lithium-ion secondary battery. For example, the positive electrode active material may be a lithium transition metal oxide containing one or more transition metals. According to one embodiment of the present invention, The positive electrode active material is selected from the group consisting of LiCoO₂, LiNiO₂, LiMnO₂, Li₂MnO₃, LiMn₂O₄, Li(NiₐCo_{b}Mn_{c})O₂(0<a<1, 0<b<1, 0<c<1, a+b+c=1), LiNi_{1-y}Co_{y}O₂(O<y<1), LiCo_{1-y}Mn_{y}O₂, LiNi_{1-y}Mn_{y}O₂(O<y<1), Li(NiₐCo_{b}Mn_{c})O₄(0<a<2, 0<b<2, 0<c<2, a+b+c=2), LiMn_{2-z}Ni_{z}O₄ (0<z<2), LiMn_{2-z}Co_{z}O₄(0<z<2) and a combination thereof.

The electrically conductive material contained in the granule is not particularly limited as long as it is located in the granule and can impart conductivity between the active material and the electrolyte. For example, the electrically conductive material may be nickel powder, cobalt oxide, titanium oxide, carbon, or the like, and the carbon may be any one selected from the group consisting of Ketjen black, acetylene black, furnace black, graphite, carbon fiber, and fullerene, or one or more types of these.

According to one embodiment of the present invention, the method of coating the electrically conductive material on the active material is not particularly limited, but for example, a method of injecting a coating material into a container with a blade capable of rotating at a high speed of 50 m/s or more, and then rotating it to deliver strong impact and shear force to the powder and thus to surface-treat the powder may be used.

Next, the preparation method of the granules for the electrode for the all-solid-state battery comprises a step of (2) spraying a binder on the coated active material to produce granules.

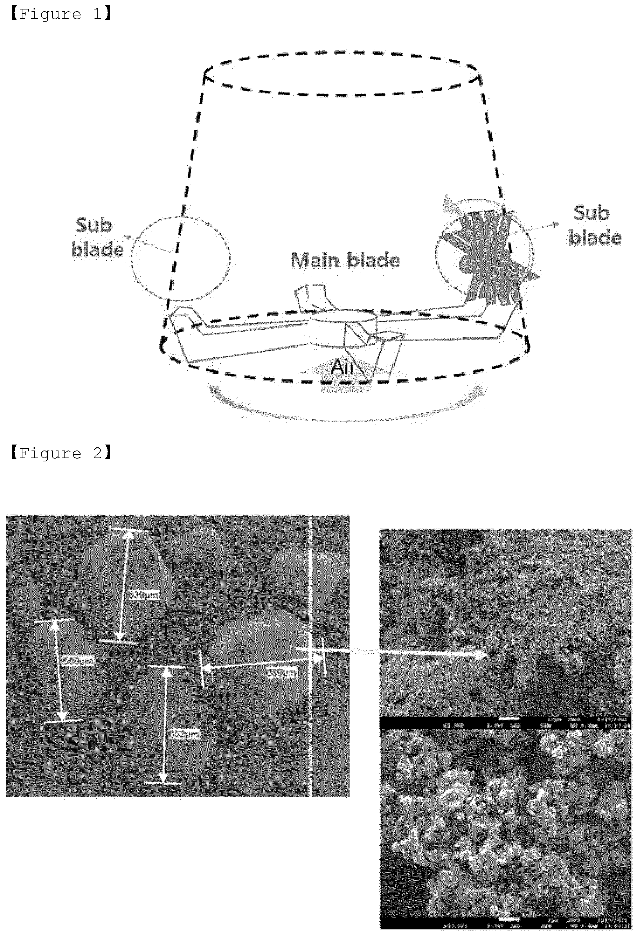

According to one embodiment of the present invention, step (2) is carried out in a container having a main blade for stirring the active material and a sub blade for grinding the aggregated particles of the active material. An example of such a container is shown in FIG. 1. In the present invention, as shown in FIG. 1, while the active material is stirred by the rotating blade in the container and the air flowing from the lower part, the binder solution is finely sprayed from the upper part of the container to this, and thus granules can be grown step by step by the sprayed binder.

According to one embodiment of the present invention, the main blade may be provided on the lower part of the container as shown in FIG. 1 to stir the coated active material. If the coated active material is stirred in this way, the binder solution is uniformly sprayed on the active material to uniformly grow granules. Since the granules prepared in this way have high porosity on the surface, when contained inside the electrode, the electrolyte penetrates into the interior of the granular particles and into the space between the particles, so it is possible to improve, for example, the cohesion problem of the positive electrode active material and the solid electrolyte,

To this end, the main blade rotates at a speed of 100 to 300 rpm. If the rotation speed is less than 100 rpm, there is a problem that the binder solution is not evenly sprayed on the active material because the stirring of the active material is not sufficient. If the rotation speed exceeds 300 rpm, there is a problem that phase separation occurs.

According to one embodiment of the present invention, the sub blade is provided on the side of the container as shown in FIG. 1 to grind the aggregated particles of the active material, thereby making it possible to prepare granules having a uniform particle diameter.

To this end, the sub blade rotates at a speed of 1000 to 3000 rpm. If the rotation speed is less than 1000 rpm, the grinding effect of the agglomerated active material is not sufficient, and thus there is a problem that the particle diameter of the prepared granules is not uniform. If the rotation speed exceeds 3000 rpm, there is a problem that the degree of grinding is excessive.

The granules are spherical particles containing an active material, an electrically conductive material, and a binder. As used herein, the term "spherical" does not mean a perfect sphere in a strict sense, and is used as a comprehensive concept, including particles having a generally round shape. The particulate active material in the powder state is combined with an electrically conductive material by a binder solution to grow into particles with a specific range of dimensions.

According to one embodiment of the present invention, the granules are spherical shape particles having a diameter of 30 µm to 1000 µm. Here, since the spherical particle does not mean a perfectly spherical particle, the diameter means the largest value among the distances from an arbitrary point on the particle surface to a point on the other surface. Specifically, the diameter of the granules may be 30 µm or more, 40 µm or more, 50 µm or more, 60 µm or more, 70 µm or more, and 1000 µm or less, 800 µm or less, 600 µm or less, 400 µm or less, 200 µm or less, 150 µm or less, 120 µm or less, and 30 µm to 1000 µm, 40 µm to 600 µm, 70 µm to 150 µm. If the diameter of the granules is less than the above range, the solid electrolyte in the liquid phase penetrates between the granules due to the small number of pores in the granular layer and the amount of coating is reduced, and thus as an all-solid-state battery, the physical contact between the active material and the solid electrolyte may not be easy. If the diameter of the granule exceeds the above range, the distance between the surface in contact with the solid electrolyte and the center of the granule increases, so the active material contained in the granule may not be utilized properly.

The binder adheres materials in contact with the center, and may cause an incidental reaction in contact with the solid electrolyte that has penetrated into the pores of the electrode. Among solid electrolytes, a sulfide-based solid electrolyte is sensitive to moisture, for example, if it comes into contact with moisture, it generates H₂S gas, etc. and thus it is preferable to exclude moisture as much as possible from the time of forming the granules. According to one embodiment of the present invention, the binder is an organic binder. The organic binder means a binder that is dissolved or dispersed in an organic solvent, particularly N-methylpyrrolidone (NMP), and is distinguished from an aqueous binder using water as a solvent or dispersion medium. Specifically, the organic binder may be selected from the group consisting of acrylic binder, polyvinylidene fluoride (PVDF), vinylidenfluoride-hexafluoropropylene copolymer (PVDF-Co-HFP), polyvinyl alcohol, starch, hydroxypropylcellulose, regenerated cellulose, polyvinylpyrrolidone, polyimide, polyamideimide, polyethylene, polypropylene, ethylene-propylene-diene monomer (EPDM), sulfonated EPDM, styrene butadiene rubber and fluorine rubber, but is not limited thereto.

According to one embodiment of the present invention, The content of the active material in the granules is 85 % by weight to 99.8 % by weight, specifically 88 % by weight to 99.5 % by weight, more specifically 90 % by weight to 99.3 % by weight, and the content of the binder is **0.1** % by weight to 10 % by weight, specifically 0.2 % by weight to 8 % by weight, more specifically 0.3 % by weight to 7 % by weight, and the content of the electrically conductive material is 0.1 % by weight to 10 % by weight, specifically 0.2 % by weight to 8 % by weight, more specifically 0.3 % by weight to 7 % by weight. When the contents of the active material, the binder and the electrically conductive material are adjusted within the above-mentioned ranges, it may be advantageous to improve the performance of the battery.

According to one embodiment of the present invention, the granules have a porosity of 10% to 50%. The porosity of the granules means a volume ratio of pores in the granules, and the porosity may be measured, for example, by a BET (Brunauer-Emmett-Teller) measurement method or a mercury penetration method (Hg porosimeter), but is not limited thereto. Specifically, the porosity of the granules may be 10% or more, 15% or more, 20% or more, 25% or more, and 50% or less, 40% or less, 30% or less, and 10% to 50%, 15% to 40%, 25% to 30%. If the porosity of the granules is less than the above range, since the solid electrolyte is difficult to come into close contact with the granules, the performance improvement of the battery may not be evident. If the porosity of the granules exceeds the above range, since the amount of the active material is reduced compared to the volume of the granules, the performance improvement of the battery may not be evident, in that it is difficult to provide the electrode highly loaded with the active material.

When preparing the granules, the binder solution is added together with the active material and the electrically conductive material of the particulates in powder state to grow the particle size of the granules to a specific level. As the solvent is dried in the formed granules, the binder and the electrically conductive material, which are relatively light in weight, are positioned outside the granules, so that the density of the outside of the granules can be increased.

One aspect of the present invention is to provide an electrode for an all-solid-state battery comprising granules prepared as described above.

According to one embodiment of the present invention, the electrode for all-solid-state batteries is an electrode for all-solid-state batteries comprising granules coated with a sulfide-based solid electrolyte, wherein said granules comprise an active material, a coating material and a binder, and wherein said granules may have a void ratio of 10 to 50%.

According to one embodiment of the present invention, the granules are spherical particles having a diameter of 30 µm to 1000 µm. Here, a spherical particle does not mean a perfectly spherical particle, so that the diameter means the largest value of the distance from a point on any surface of the particle to a point on another surface. Specifically, the diameter of the granules may be 30 µm or more, 40 µm or more, 50 µm or more, 60 µm or more, 70 µm or more, 1000 µm or less, 800 µm or less, 600 µm or less, 400 µm or less, 200 µm or less, 150 µm or less, 120 µm or less, and may be 30 µm to 1000 µm, 40 µm to 600 µm, 70 µm to 150 µm. If the diameter of the granules is less than the above range, the amount of liquid solid electrolyte penetrating and coating the granules may be reduced due to less pores in the granule layer, and physical contact between the active material and the solid electrolyte may not be easy as an all-solid-state battery, and if the diameter of the granules is greater than the above range, the distance between the surface in contact with the solid electrolyte and the center of the granules may become larger, and the active material contained in the granules may not be utilized properly.

According to one embodiment of the present invention, in order to prepare an electrode for an all-solid-state battery, first, granules including the active material, electrically conductive material and the binder are coated on the current collector. The composition of the granules follows the above description, and the amount of granules to be applied can be determined in consideration of the performance and specific application of the battery. According to one embodiment of the present invention, the granules are applied so that the energy density is 1 mAh/cm² to 6 mAh/cm². The energy density is a value obtained by dividing the theoretical capacity according to the characteristics of the material of the granules by the area facing the granules in the current collector. Specifically, the energy density depending on the application amount of the granules may be 1 mAh/cm² to 6 mAh/cm², 2 mAh/cm² to 5.5 mAh/cm², 3 mAh/cm² to 5 mAh/cm². It is desirable to pursue high energy density for the performance of the battery, but if an excessively large amount of granules is applied, the actual capacity may not only be far below the theoretical capacity, but also the battery may become too thick, which may be undesirable.

The binder bonds the materials that are centered and in contact with the solid electrolyte that has penetrated into the pores of the electrode and can cause incidental reactions. Since sulfide-based solid electrolytes have moisture-sensitive properties, such as generating H2S gas upon contact with moisture, it is desirable to exclude as much moisture as possible from the formation of the granules. According to one embodiment of the present invention, said binder is an organic binder. By organic binders, we mean binders that are soluble or dispersible in organic solvents, in particular N-methylpyrrolidone (NMP), as distinguished from aqueous binders, where water is the solvent or dispersing medium. Specifically, the organic binders include acrylic binders, polyvinylidene fluoride (PVDF), vinylidene fluoride-hexafluoropropylene copolymer (PVDF-co-HFP), polyvinyl alcohol, starch, hydroxypropyl cellulose, and regenerated cellulose, polyvinylpyrrolidone, polyimide, polyamideimide, polyethylene, polypropylene, ethylene-propylene-diene monomer (EPDM), sulfonated EPDM, styrene butadiene rubber, and fluorinated rubber.

According to one embodiment of the invention, in said granules, the active material is 85 wt% to 99.8 wt%, more particularly 88 wt% to 99.5 wt%, more particularly 90 wt% to 99.3 wt%, the binder is 0.1 wt% to 10 wt%, more particularly 0.2 wt% to 8 wt%, more particularly 0.3 wt% to 7 wt%, and the coating material is 0.1 wt% to 10 wt%, more particularly 0.2 wt% to 8 wt%, more particularly 0.3 wt% to 7 wt%. When the content of the active material, the binder, and the coating material is controlled within the ranges described above, improved performance of the cell may be advantageous.

According to one embodiment of the present invention, in order for the electrode to be applied to an all-solid-state battery, the granules can be coated with a solid electrolyte by introducing a liquid solid electrolyte into the pores of the granular layer and drying it. The solid electrolyte may be coated on at least a part or all of the surface of the granules. The polymer-based solid electrolyte may be a polymer solid electrolyte formed by adding a polymer resin to a solvated lithium salt, or a polymer gel electrolyte obtained by incorporating an organic solvent and an organic electrolyte containing a lithium salt, an ionic liquid, a monomer or an oligomer, etc. to a polymer resin. The solid electrolyte may be at least one selected from a polymer-based solid electrolyte, a sulfide-based solid electrolyte, and an oxide-based solid electrolyte, and according to one embodiment of the present invention, the solid electrolyte is a sulfide-based solid electrolyte. In the electrode for the all-solid-state, the sulfide-based solid electrolyte is applied by impregnating the sulfide-based electrolyte with the granular layer composed of the above-mentioned granules and drying it.

According to one embodiment of the present invention, the lithium salt is an ionizable lithium salt, which may be expressed as Li⁺X⁻. The anion of the lithium salt is not particularly limited, but F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻ and the like can be exemplified. In one embodiment of the present invention, the sulfide-based solid electrolyte contains sulfur (S) and has ionic conductivity of a metal belonging to Group 1 or Group 2 of the periodic table, which may comprise Li-P-S-based glass or Li-P-S-based glass ceramics. Non-limiting examples of such a sulfide-based solid electrolyte may be Li₂S-P₂S₅, Li₂S-LiI-P₂S₅, Li₂S-LiI-Li₂O-P₂S₅, Li₂S-LiBr-P₂S₅, Li₂S-LiCl-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂, Li₂S-GeS₂-ZnS and the like, and may comprise one or more of these.

According to one embodiment of the present invention, in the electrode for the all-solid-state battery, the electrode active material layer comprising the granules coated with the sulfide-based solid electrolyte has a thickness of 100 µm to 400 µm. Here, the electrode active material layer, when a current collector is used in manufacturing the electrode, means a sheet-like layer applied on the current collector except for the current collector. Specifically, the thickness of the electrode active material layer may be 100 µm or more, 110 µm or more, 120 µm or more, 130 µm or more, 140 µm or more, 150 µm or more, and 400 µm or less, 350 µm or less, 300 µm or less, 280 µm or less, 270 µm or less, 260 µm or less, 250 µm or less, and 100 µm to 400 µm, 120 µm to 300 µm, 150 µm to 250 µm. If the thickness of the electrode active material layer is less than the above range, as the loading amount of the active material is reduced, the performance improvement of the battery may not be evident. If the thickness of the electrode active material layer exceeds the above range, as the durability of the electrode is poor, the performance improvement of the battery may not be evident.

According to one embodiment of the present invention, in the electrode for the all-solid-state battery, the electrode active material layer containing the granules coated with the sulfide-based solid electrolyte contains the sulfide-based solid electrolyte of 20 % by weight to 40 % by weight based on the content of the granules. Specifically, the content of sulfide-based solid electrolyte may be 20 % by weight or more, 21 % by weight or more, 22 % by weight or more, 23 % by weight or more, 24 % by weight or more, 25 % by weight or more, and 40 % by weight or less, 39 % by weight or less, 38 % by weight or less, 37 % by weight or less, 36 % by weight or less, 35 % by weight or less, and 20 % by weight to 40 % by weight, 22 % by weight to 37 % by weight, 25 % by weight to 35 % by weight. If the content of the sulfide-based solid electrolyte is less than the above range, as an all-solid-state battery, electron movement between the electrolyte and the active material is not easy, so the performance improvement of the battery may not be evident. If the content of the sulfide-based solid electrolyte exceeds the above range, the loading amount of the active material is relatively reduced, so the performance improvement of the battery may not be evident.

In one aspect of the present invention, the present invention provides an all-solid-state battery comprising an electrode for all-solid-state battery for the above-described all-solid-state battery as a positive electrode and/or a negative electrode. In configuring the all-solid-state battery, a separate solid electrolyte layer may be introduced between the positive electrode and the negative electrode in addition to the solid electrolyte comprised in the electrode, and this solid electrolyte layer can play the same role as a separator in a general lithium secondary battery at the same time. In some cases, the above-described electrode can be used as a semi-solid battery by using a liquid electrolyte together, and in this case, a separate polymer separator may be further required.

The polymer separator is interposed between the negative electrode and the positive electrode, which serves to electrically insulate the negative electrode and the positive electrode while allowing lithium ions to pass therethrough. The polymer separator may be any one used as a polymer separator membrane used in the field of general all-solid-state batteries and is not particularly limited.

In one aspect of the present invention, the present invention provides a battery module comprising the all-solid-state battery as a unit cell, a battery pack comprising the battery module, and a device comprising the battery pack as a power source.

Specific examples of the device may comprise, but are not limited to, a power tool powered by an electric motor; electric cars comprising an electric vehicle (EV), a hybrid electric vehicle (HEV), a plug-in hybrid electric vehicle (PHEV), and the like; an electric motorcycle comprising an electric bike (E-bike) and an electric scooter (E-scooter); an electric golf cart; and a power storage system.

Hereinafter, preferred Examples are presented to help the understanding of the present invention, but the following Examples are provided for easier understanding of the present invention, and the present invention is not limited thereto.

### Example

### Example 1

After preparing LFP as an active material and carbon black as an electrically conductive material, and mixing them in a weight ratio of 94:3 (active material:electrically conductive material), the raw materials were put into a horizontal cylindrical mixing container with a rotor, and then rotated at a high speed with a blade with a peripheral speed of 50 m/s to transmit a strong impact and shear force to the powder and thus to coat the electrically conductive material on the surface of the active material. As shown in Fig. 1, the active material coated with the electrically conductive material was put into a container (1L) having a main blade at the bottom for mixing the active material and a sub blade at the side for grinding the aggregated particles of the active material. After that, while stirring the active material coated with the electrically conductive material (main blade 300 rpm, sub blade 3000 rpm), at the top of the container, a binder solution having a solid content of 70% obtained by mixing Polyvinylidene Fluoride (PVDF) with NMP is sprayed onto the active material coated with the electrically conductive material in a spraying manner to prepare granules with a diameter of about 500 µm so as to have a weight ratio of 94:3:3 (active material:electrically conductive material:binder).

### Comparative Example 1

LFP as an active material, carbon black as an electrically conductive material, and water base as a water-based binder were mixed in a weight ratio of 94:3:3 (active material: electrically conductive material: binder) to prepare a slurry, and then granules having a diameter of 60 µm were prepared by a spray-drying method.

### Comparative Example 2

Granules were prepared in the same manner as in Example 1, except that after preparing LFP as an active material and carbon black as an electrically conductive material and mixing them in a weight ratio of 94:3 (active material: electrically conductive material), a separate coating step is not performed.

### Comparative Example 3

Granules were prepared in the same way as in Example 1, except that a mixing vessel without a main blade was used.

### Comparative Example 4

Granules were prepared in the same way as in Example 1, except that a mixing vessel without a sub blade was used.

### Experimental Example 1: Evaluation of physical property of electrode

The particles prepared in Example and Comparative Examples were tested for physical properties as follows, and the results are described below.

### (1) Physical property for particle property

The granules prepared in Example 1 and Comparative Examples 1 to 2 were photographed with an electron microscope (SEM), and the results are shown in FIGs. 2 to 4.

Referring to FIG. 2 photographing the granules prepared in Example 1, it was found that the binder contained in the granules is evenly dispersed inside the active material, and the porosity of the surface of the granules is high. The porosity measured using a mercury porosity analyzer (Autopore by Micromeritics) was approximately 40%.

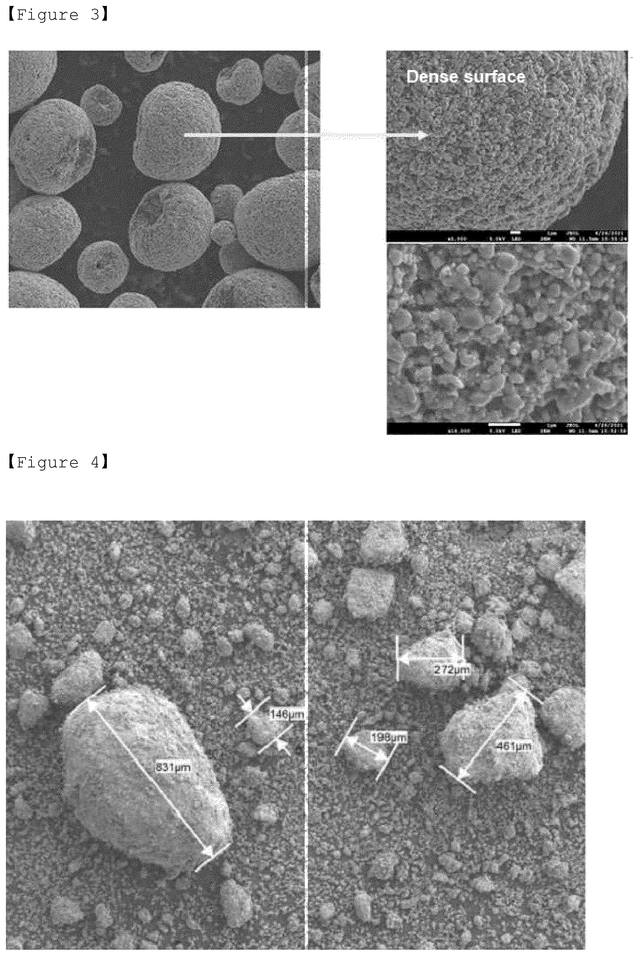

On the other hand, referring to FIG. 3 photographing the granules prepared in Comparative Example 1, it was found that the electrically conductive material and the binder contained in the granules migrate to the outside of the granules, so that the surface of the granules becomes dense and the porosity decreases. The porosity measured using a mercury porosity analyzer (Autopore by Micromeritics) was approximately 8%.

Referring to FIG. 4 photographing the granules prepared in Comparative Example 2, it was found that as granules are produced by spraying the binder while mixing the active material and the electrically conductive material without coating with the electrically conductive material, phase separation occurs between the active material and the electrically conductive material, and thus uniform particles are not formed. In particular, it was found that although some atypical granules are formed with non-uniform sizes, most of them exist in the form of powders mixed with raw materials without forming the granules themselves.

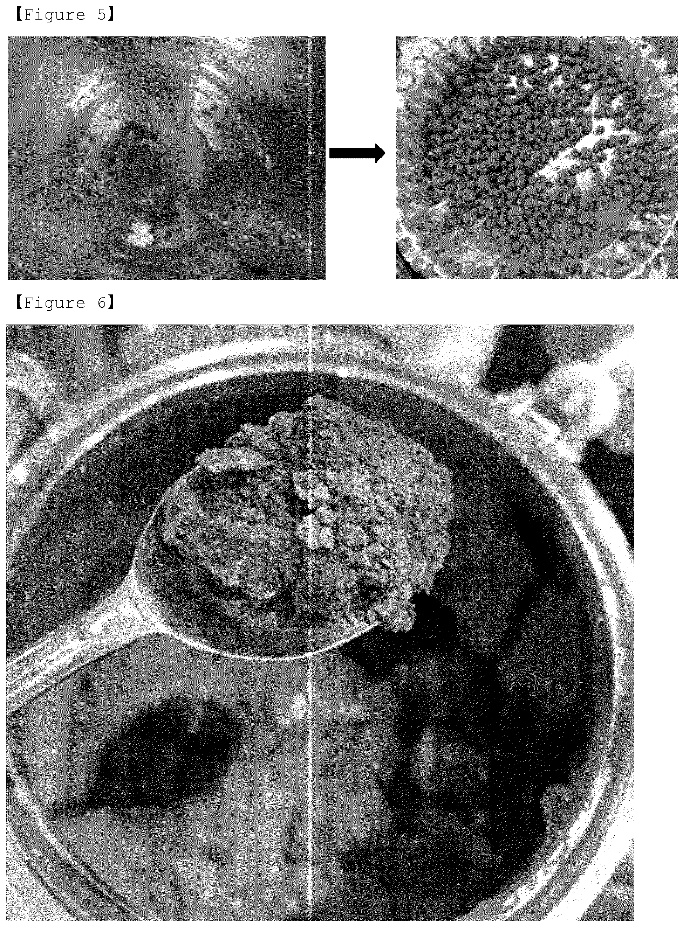

Furthermore, the granules prepared in Example 1 and Comparative Examples 3 and 4 were photographed and shown in FIGS. 5 to 7.

In FIG. 5, which shows the granules produced in Example 1, it can be seen that uniformly spherical granules are produced.

On the other hand, in FIG. 6, which shows the granules produced in Comparative Example 1, it can be seen that the binder is sprayed without the mail blade rotation, so that no granules are produced and the powder remains wet in the binder.

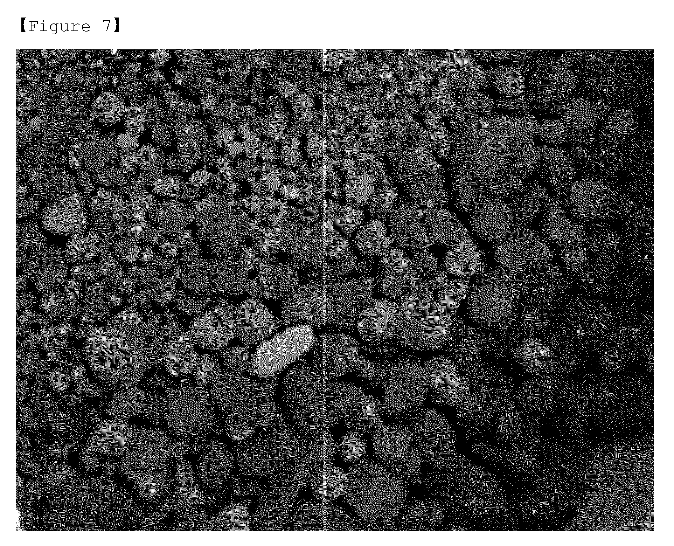

Also, in FIG. 7, which shows the granules produced in Comparative Example 2, it can be seen that it is difficult to produce granules with a uniform particle size because only the main blade is rotating without the sub-blade.

### Experimental Example 2: Performance Evaluation of the Cells

The granules prepared in Example 1 and Comparative Examples 1 to 4 were applied to one side of an aluminum collector, rolled, impregnated with a sulfide-based electrolyte in LiPSCl, dried, and rolled to prepare a positive electrode with a thickness of about 130 µm (the sulfide-based electrolyte contained about 20 wt% of the granules). A 1.5 mm thick electrolyte layer was prepared by pressurizing the sulfide-based electrolyte of LiPSCl, and a 100 µm thick lithium metal was used to prepare the negative electrode.

The positive electrode and negative electrode were stacked and pressed together to form an electrode assembly, which was then placed inside the cell case to form an all-solid-state cell.

The prepared cells were discharged at 0.1C and 1.0C, respectively, to measure the discharge capacity ratio (1.0C/0.1C). The results are shown in Table 1 below for each prepared granule.

**[Table 1]**

| Performance | Ex. 1 | Co-Ex. 1 | Co-Ex. 2 | Co-Ex. 3 | Co-Ex. 4 |
|---|---|---|---|---|---|
| Discharge capacity ratio (%) | 65% | 44% | Less than 40% | 51% | 54% |

According to Table 1, it can be seen that the granules according to Example 1 have improved output characteristics due to reduced resistance compared to the granules according to Comparative Examples 1 to 4.

All simple modifications and variations of the present invention fall within the scope of the present invention, and the specific scope of protection of the present invention will become apparent from the appended claims.

## Claims

1. A method for preparing granules for an electrode for an all-solid-state battery comprising steps of,
(1) coating an electrically conductive material on an active material; and
(2) spraying a binder on the coated active material to produce granules;
wherein step (2) is performed in a container having a main blade for stirring the active material and a sub blade for grinding the aggregated particles of the active material;
the main blade rotates at a speed of 100 to 300 rpm; and
the sub blade rotates at a speed of 1000 to 3000 rpm.

2. The method for preparing the granules for the electrode for the all-solid-state battery according to claim 1, wherein step (1) is to stir the active material and the electrically conductive material in a mixing container in which the blade rotates at a peripheral speed of 20 to 100 m/s.

3. The method for preparing the granules for the electrode for the all-solid-state battery according to claim 1, wherein the granules are spherical particles having a diameter of 30 µm to 1000 µm.

4. The method for preparing the granules for the electrode for the all-solid-state battery according to claim 1, wherein the granules have a porosity of 10 to 50% measured as set forth in the description.

5. The method for preparing the granules for the electrode for the all-solid-state battery according to claim 1,
wherein the binder is selected from the group consisting of acrylic binder, polyvinylidene fluoride, vinylidenfluoride-hexafluoropropylene copolymer, polyvinyl alcohol, starch, hydroxypropylcellulose, regenerated cellulose, polyvinylpyrrolidone, polyimide, polyamideimide, polyethylene, polypropylene, ethylene-propylene-diene monomer (EPDM), sulfonated EPDM, styrene butadiene rubber and fluorine rubber.

6. An electrode for an all-solid-state battery comprising granules coated with a sulfide-based solid electrolyte,
wherein the granules comprise an active material, a conductive material and a binder,
the granules are obtainable by a method according to claim 1,
wherein the granules have a porosity of 10 to 50% measured as set forth in the description.

7. The electrode for an all-solid-state battery according to claim 6,
Wherein the granules is spherical particles having a diameter of 30 µm to 1000 µm.

8. The electrode for an all-solid-state battery according to claim 6,
wherein the binder is selected from the group consisting of acrylic binder, polyvinylidene fluoride, vinylidenfluoride-hexafluoropropylene copolymer, polyvinyl alcohol, starch, hydroxypropylcellulose, regenerated cellulose, polyvinylpyrrolidone, polyimide, polyamideimide, polyethylene, polypropylene, ethylene-propylene-diene monomer (EPDM), sulfonated EPDM, styrene butadiene rubber and fluorine rubber.

9. An all-solid-state battery comprising an electrode of claim 6 as a positive electrode or negative electrode.

## Patentansprüche

1. Verfahren zur Herstellung von Körnchen für eine Elektrode für eine Festkörperbatterie, umfassend die Schritte:
(1) Beschichten eines aktiven Materials mit einem elektrisch leitfähigen Material; und
(2) Sprühen eines Bindemittels auf das beschichtete aktive Material, um Körnchen herzustellen;
wobei Schritt (2) in einem Behälter durchgeführt wird, der ein Hauptblatt zum Rühren des aktiven Materials und ein Nebenblatt zum Mahlen der aggregierten Teilchen des aktiven Materials aufweist;
das Hauptblatt mit einer Geschwindigkeit von 100 bis 300 U/min rotiert; und
das Nebenblatt mit einer Geschwindigkeit von 1000 bis 3000 U/min rotiert.

2. Verfahren zur Herstellung der Körnchen für die Elektrode für die Festkörperbatterie nach Anspruch 1, wobei Schritt (1) darin besteht, das aktive Material und das elektrisch leitfähige Material in einem Mischbehälter zu rühren, in dem das Blatt mit einer Umfangsgeschwindigkeit von 20 bis 100 m/s rotiert.

3. Verfahren zur Herstellung der Körnchen für die Elektrode für die Festkörperbatterie nach Anspruch 1, wobei die Körnchen kugelförmige Teilchen mit einem Durchmesser von 30 um bis 1000 µm sind.

4. Verfahren zur Herstellung der Körnchen für die Elektrode für die Festkörperbatterie nach Anspruch 1, wobei die Körnchen eine Porosität von 10 bis 50 % aufweisen, gemessen wie in der Beschreibung dargelegt.

5. Verfahren zur Herstellung der Körnchen für die Elektrode für die Festkörperbatterie nach Anspruch 1,
wobei das Bindemittel ausgewählt ist aus der Gruppe bestehend aus Acrylbindemittel, Polyvinylidenfluorid, Vinylidenfluorid-Hexafluorpropylen-Copolymer, Polyvinylalkohol, Stärke, Hydroxypropylcellulose, regenerierter Cellulose, Polyvinylpyrrolidon, Polyimid, Polyamidimid, Polyethylen, Polypropylen, Ethylen-Propylen-Dien-Monomer (EPDM), sulfoniertem EPDM, Styrol-Butadien-Kautschuk und Fluorkautschuk.

6. Elektrode für eine Festkörperbatterie, umfassend Körnchen, die mit einem Festelektrolyten auf Sulfidbasis beschichtet sind,
wobei die Körnchen ein aktives Material, ein leitfähiges Material und ein Bindemittel umfassen,
die Körnchen durch ein Verfahren nach Anspruch 1 erhältlich sind,
wobei die Körnchen eine Porosität von 10 bis 50 % aufweisen, gemessen wie in der Beschreibung dargelegt.

7. Elektrode für eine Festkörperbatterie nach Anspruch 6,
wobei die Körnchen kugelförmige Teilchen mit einem Durchmesser von 30 µm bis 1000 µm sind.

8. Elektrode für eine Festkörperbatterie nach Anspruch 6,
wobei das Bindemittel ausgewählt ist aus der Gruppe bestehend aus Acrylbindemittel, Polyvinylidenfluorid, Vinylidenfluorid-Hexafluorpropylen-Copolymer, Polyvinylalkohol, Stärke, Hydroxypropylcellulose, regenerierter Cellulose, Polyvinylpyrrolidon, Polyimid, Polyamidimid, Polyethylen, Polypropylen, Ethylen-Propylen-Dien-Monomer (EPDM), sulfoniertem EPDM, Styrol-Butadien-Kautschuk und Fluorkautschuk.

9. Festkörperbatterie, umfassend eine Elektrode nach Anspruch 6 als positive Elektrode oder negative Elektrode.

## Revendications

1. Procédé de préparation de granules pour une électrode pour une batterie tout-solide comprenant les étapes consistant à
(1) revêtir un matériau électroconducteur sur un matériau actif ; et
(2) pulvériser un liant sur le matériau actif revêtu pour produire des granules ;
dans lequel l'étape (2) est effectuée dans un récipient ayant une lame principale pour agiter le matériau actif et une lame secondaire pour broyer les particules agrégées du matériau actif ;
la lame principale tourne à une vitesse de 100 à 300 tr/mn ; et
la lame secondaire tourne à une vitesse de 1000 à 3000 tr/mn.

2. Procédé de préparation des granules pour l'électrode pour la batterie tout-solide selon la revendication 1, dans lequel l'étape (1) consiste à agiter le matériau actif et le matériau électroconducteur dans un récipient de mélange dans lequel la lame tourne à une vitesse périphérique de 20 à 100 m/s.

3. Procédé de préparation des granules pour l'électrode pour la batterie tout-solide selon la revendication 1, dans lequel les granules sont des particules sphériques ayant un diamètre de 30 µm à 1000 µm.

4. Procédé de préparation des granules pour l'électrode pour la batterie tout-solide selon la revendication 1, dans lequel les granules ont une porosité de 10 à 50 %, mesurée comme décrit dans la description.

5. Procédé de préparation des granules pour l'électrode pour la batterie tout-solide selon la revendication 1,
dans lequel le liant est sélectionné dans le groupe constitué de liant acrylique, fluorure de polyvinylidène, copolymère de fluorure de vinylidène-hexafluoropropylène, alcool polyvinylique, amidon, hydroxypropylcellulose, cellulose régénérée, polyvinylpyrrolidone, polyimide, polyamideimide, polyéthylène, polypropylène, monomère d'éthylène-propylène-diène (EPDM), EPDM sulfoné, caoutchouc styrène-butadiène et caoutchouc fluoré.

6. Électrode pour une batterie tout-solide comprenant des granules revêtus d'un électrolyte solide à base de sulfure,
dans laquelle les granules comprennent un matériau actif, un matériau conducteur et un liant,
les granules peuvent être obtenus par un procédé selon la revendication 1,
dans laquelle les granules ont une porosité de 10 à 50 %, mesurée comme décrit dans la description.

7. Électrode pour une batterie tout-solide selon la revendication 6,
dans laquelle les granules sont des particules sphériques ayant un diamètre de 30 µm à 1000 µm.

8. Électrode pour une batterie tout-solide selon la revendication 6,
dans laquelle le liant est sélectionné dans le groupe constitué de liant acrylique, fluorure de polyvinylidène, copolymère de fluorure de vinylidène-hexafluoropropylène, alcool polyvinylique, amidon, hydroxypropylcellulose, cellulose régénérée, polyvinylpyrrolidone, polyimide, polyamideimide, polyéthylène, polypropylène, monomère d'éthylène-propylène-diène (EPDM), EPDM sulfoné, caoutchouc styrène-butadiène et caoutchouc fluoré.

9. Batterie tout-solide comprenant une électrode selon la revendication 6 étant une électrode positive ou une électrode négative.
